(19) Europäisches Patentamt
European Patent Office
Office européen des brevets

(11) EP 0 764 652 B1

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.$^7$: **C07F 9/655**

(21) Anmeldenummer: **96114441.7**

(22) Anmeldetag: **10.09.1996**

(54) **Neue Zwischenprodukte für die Synthese von Bisphosphinverbindungen**

Novel intermediates for the synthesis of bisphosphine compounds

Nouveaux intermédiaires pour la synthèse de composés de bisphosphines

(84) Benannte Vertragsstaaten:
**AT BE CH DE DK ES FI FR GB GR IE IT LI LU MC NL PT SE**

(30) Priorität: **22.09.1995 DE 19535243**

(43) Veröffentlichungstag der Anmeldung:
**26.03.1997 Patentblatt 1997/13**

(73) Patentinhaber: **BAYER AG**
**51368 Leverkusen (DE)**

(72) Erfinder:
- **Sirges, Wolfram, Dr.**
**40597 Düsseldorf (DE)**
- **Laue, Christian, Dr.**
**40789 Monheim (DE)**
- **Arlt, Dieter, Prof. Dr.**
**51065 Köln (DE)**
- **Grosser, Rolf, Dr.**
**51373 Leverkusen (DE)**

(56) Entgegenhaltungen:
**EP-A- 0 643 065** **WO-A-92/16536**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 764 652 B1

Printed by Jouve, 75001 PARIS (FR)

**Beschreibung**

Die Erfindung betrifft neue Bisphosphonate sowie Verfahren zu ihrer Herstellung und zu ihrer Auftrennung in die Enantiomere. Die erfindungsgemäßen Bisphosphonate sind wertvolle Zwischenprodukte zur Herstellung von Bisphosphinverbindungen, insbesondere von chiralen Bisphosphinliganden. Diese wiederum sind Bestandteile von Komplexen mit Übergangsmetallen, welche als Katalysatoren u.a. bei der asymmetrischen Hydrierung dienen.

Aus der EP-A 0 643 065 sind enantiomerenreine Bisphosphine, Verfahren zu ihrer Herstellung und ihre Verwendung in Metallkomplexen als Katalysatoren für asymmetrische Hydrierungen bekannt.

Die erforderliche Auftrennung in die Enantiomere erfolgt bei diesem Verfahren auf der Stufe der Bisphosphinoxide durch Chromatographie.

Überraschenderweise wurde nun gefunden, daß Bisphosphonate (I) wesentlich leichter in die Enantiomere aufzutrennen sind als die bekannten Bisphosphinoxide.

Die Erfindung betrifft daher Bisphosphonate der allgemeinen Formel (I)

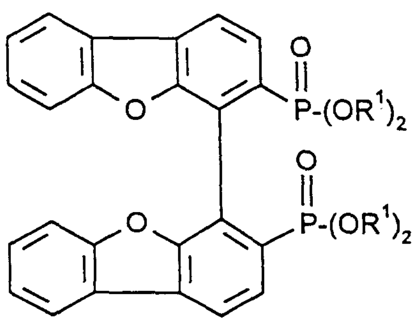

(I),

in welcher

$R^1$ für geradkettiges oder verzweigtes Alkyl mit bis zu 6 Kohlenstoffatomen, Aryl oder Aralkyl, die gegebenenfalls substituiert sein können, steht, oder jeweils zwei Reste $R^1$ zusammen für einen verbrückenden Kohlenwasserstoffrest mit bis zu 6 Kohlenstoffatomen stehen,

in Form ihrer Racemate oder als Enantiomere.

Bevorzugt sind Verbindungen der allgemeinen Formel (I), in denen $R^1$ für Alkylgruppen mit bis zu 4 C-Atomen, besonders bevorzugt für Ethyl steht.

Weiterhin betrifft die Erfindung ein Verfahren zur Herstellung von Verbindungen der allgemeinen Formel (I), bei dem man Halogenverbindungen der allgemeinen Formel (II)

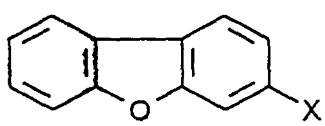

(II),

in welcher

X für Halogen, insbesondere Brom steht,

mit einer Verbindung $P(OR^1)_3$, worin $R^1$ die oben angegebene Bedeutung hat,
in Gegenwart eines geeigneten Katalysators, insbesondere Palladium(II)- oder Nickel(II)-halogeniden, wie z.B. $PdCl_2$ oder $NiBr_2$, und in Lösemitteln zu Verbindungen der allgemeinen Formel (III)

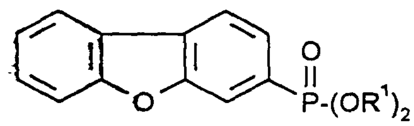

(III),

in welcher

$R^1$ die oben angegebene Bedeutung hat,

umsetzt.

Durch ortho-Lithiierung beispielsweise mit einem Lithiumamid, wie Lithiumdiisopropylamid in Tetrahydrofuran, und anschließende Halogenierung, bevorzugt Iodierung beispielsweise mit molekularem Iod, ICl oder IBr, werden die Verbindungen der Formel (III) in Verbindungen der Formel (IV)

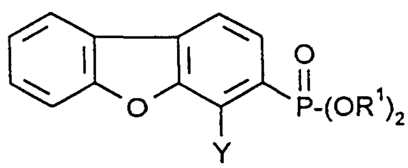

(IV),

in welcher

$R^1$ die oben angegebene Bedeutung hat und

Y für Halogen, bevorzugt Iod steht,

überführt.

Beide Reaktionen werden bei Temperaturen unter 0°C durchgeführt, vorzugsweise im Bereich von 0°C bis -100°C.

Aus den Verbindungen der Formel (IV) können durch an sich bekannte Kupplungsreaktionen, z.B. mittels Ullmann-Kupplung, racemische Verbindungen der Formel (I)

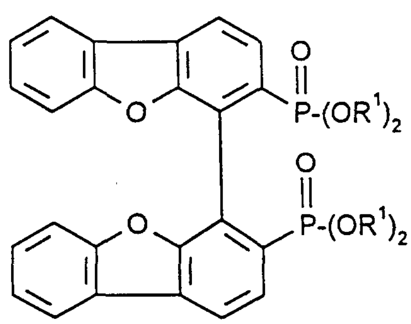

(I),

hergestellt werden. Bevorzugt werden dazu Verbindungen der Formel (IV), gegebenenfalls in einem inerten organischen Lösungsmittel, z.B. Dimethylformamid oder Nitromethan, mit Kupferpulver auf Temperaturen von 80°C bis 250°C erhitzt.

Die Erfindung betrifft auch die neuen Zwischenprodukte der allgemeinen Formeln (III) und (IV).

Es wurde nun gefunden, daß die Enantiomere der Formel (I) an chiralen stationären Phasen, wie z.B. Polymeren von optisch aktiven (Meth)acrylsäurederivaten, Cellulosederivatephasen (z.B. Ester und Carbamate) oder Cellulosetriacetatphasen getrennt werden können. Bevorzugt verwendet man optisch aktive Polymere von optisch aktiven (Meth)acrylsäurederivaten als Perlpolymerisate oder in an Kieselgel gebundener Form, wie sie in US-A-5 274 167 beschrieben werden. Besonders bevorzugt sind Perlpolymerisate aus N-(Meth)acryloyl-L-alanin-L-menthylamid und

Kieselgelphasen aus N-(Meth)acryloyl-L-leucin-2,4-dimethyl-3-pentylamid.

Als Fließmittel für die Trennung der Racemate werden übliche organische Lösemittel bzw. Lösemittelgemische eingesetzt. Beispielsweise seien genannt: Kohlenwasserstoffe wie Benzol, Toluol oder Xylol, Ether wie Diethylether, Dioxan, Tetrahydrofuran, Halogenkohlenwasserstoffe wie Di- oder Trichlormethan, Aceton, Acetonitril, Alkohole wie Ethanol oder Propanol, Essigester oder aber Gemische der genannten Lösemittel. Als besonders geeignet haben sich Mischungen aus Toluol und Tetrahydrofuran sowie Toluol und Dioxan erwiesen.

Die Trennung der Enantiomeren kann durch den Trennfaktor α beschrieben werden. Der Trennfaktor α, auch Enantioselektivitätswert genannt, ist durch die folgende Formel definiert:

$$\text{Trennfaktor} \qquad \alpha = \frac{k'_2}{k'_1}$$

$$\text{Kapazitätsverhältnis } k'_{1(2)} = \frac{t_{1(2)} - t_0}{t_0}$$

$t_0$ = Totzeit der Säule

$t_{1(2)}$ = Retentionszeit des zuerst eluierten Enantiomers 1 bzw. des später eluierten Enantiomers 2.

Mit den erfindungsgemäßen Bisphosphonaten können α-Werte von über 2 erreicht werden. Im Gegensatz dazu liegt bei dem in EP-A 0 643 065 beschriebenen Verfahren der Trennfaktor α der Bisphosphinoxide bei Werten um 1,3. Weiterhin zeichnen sich die erfindungsgemäßen Bisphosphonate durch eine im Vergleich zu den Bisphosphinoxiden deutlich höhere Löslichkeit aus.

Aufgrund dieser unerwartet günstigen Eigenschaften eignen sich die erfindungsgemäßen Bisphosphonate der allgemeinen Formel (I) als Schlüsselverbindungen für die Synthese von chiralen Bisphosphinliganden. Diese können z.B. hergestellt werden, in dem man die Verbindungen der Formel (I) nach üblichen Methoden in die Phosphonsäurehalogenide überführt und daraus, beispielsweise durch Umsetzung mit Grignardverbindungen, Bisphosphinoxidverbindungen herstellt. Diese können gemäß den Angaben in EP-A 0 643 065 zu Bisphosphinliganden reduziert werden, die ihrerseits für die Herstellung von chiralen Übergangsmetall-Komplexen als stereoselektive Katalysatoren wertvoll sind.

## Beispiele

### 1. Herstellungsbeispiel

**Synthese von (Bis-4,4'-dibenzofuran-3,3'-yl)-bis-diethylphosphonat**

1a) (Dibenzofuran-3-yl)-diethylphosphonat (III)

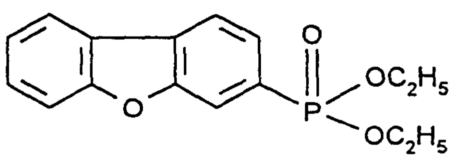

Eine Mischung aus 100 g (0,34 mol) 3-Brom-dibenzofuran, 1,2 g (6 mmol) Palladiumdichlorid und 68 g (0,41 mol) Triethylphosphit wurde unter Rühren auf 160°C erhitzt. Das entstehende Ethylbromid wurde durch einen leichten Stickstoffstrom aus dem Reaktionsgemisch entfernt. Nach Perioden von jeweils 1 Stunde setzte man dreimal 68 g Triethylphosphit zu und hielt das Reaktionsgemisch anschließend über Nacht bei 160°C. Im Hochvakuum wurde das überschüssige Triethylphosphit entfernt und das Produkt durch Säulenchromatographie (Cyclohexan/Essigester 1:1) gereinigt.

Ausbeute: 95 g (92 %)
Schmp.: 58 bis 60°C

1b) (4-Iod-dibenzofuran-3-yl)-diethylphosphonat (IV)

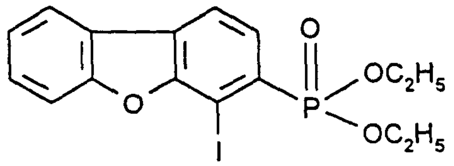

25 g (82 mmol) (Dibenzofuran-3-yl)-diethylphosphonat wurden in 1,5 l wasserfreiem THF gelöst und unter Schutzgas auf -78°C abgekühlt. Bei dieser Temperatur tropfte man eine Lösung von 82 mmol Lithiumdiisopropylamid in THF hinzu, die man zuvor aus 8,3 g (82 mmol) Diisopropylamin und 82 mmol n-Butyllithium in THF frisch hergestellt hatte. Man rührte noch 10 min nach und tropfte anschließend eine Lösung von 20,8 g (82 mmol) Iod in 400 ml wasserfreiem THF so zu, daß die Temperatur -70°C nicht überschritt. Nachdem 10 min nachgerührt worden war, hydrolysierte man mit gesättigter Ammoniumchloridlösung und trennte die Phasen. Die organische Phase wurde mit Natriumsulfitlösung und Ammoniumchloridlösung gewaschen und über $MgSO_4$ getrocknet. Abdampfen des Lösungsmittels ergab 33,9 g eines hellbraunen Feststoffs.

Ausbeute: 33,9 g (95 %) bei einer Reinheit von 97 % (GC).

1c) rac-(Bis-4,4'-dibenzofuran-3,3'-yl)-bis-diethylphosphonat (I)

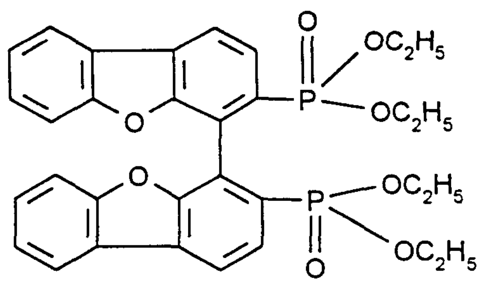

Unter Schutzgasatmosphäre wurden 33 g (76 mmol) des (2-Iod-dibenzofuran-3-yl)-diethylphosphonats in 500 ml wasserfreiem N,N-Diethylformamid gelöst und mit 20 g (0,3 mol) Kupferpulver versetzt. Die dunkelbraune Suspension wurde unter starkem Rühren und Stickstoffatmosphäre für 20 h auf 140°C erhitzt. Die heiße Reaktionslösung filtrierte man über Celite und wusch mit 200 ml Methylenchlorid nach. Das Reaktionsgemisch wurde anschließend im Vakuum zur Trockne eingedampft. Das erhaltene braune Öl wurde mit tert.-Butylmethylether ausgerührt und der leicht bräunlich gefärbte Feststoff abgesaugt.

Schmp.: 182°C
Ausbeute: 17,3 g (75 %)

**2. Beispiel:**

Chromatographische Racematspaltung

0,5 g racemisches (Bis-4,4'-dibenzofuran-3,3'-yl)bis-diethylphosphonat, gelöst in 24 ml THF und 16 ml n-Heptan, wurden auf eine Stahlsäule (63 mm, 50 cm Länge) mit einer Kieselgelphase aus N-(Meth)acryloyl-L-leucin-2,4-dimethyl-3-pentylamid aufgegeben. Man eluierte mit n-Heptan/THF (3:2; v/v) bei einem Fluß von 100 ml/min. Nach 21,2 min erhielt man zunächst das (+)Enantiomer, das (-)Enantiomer eluierte nach 28,0 min. Die fraktionierten Eluate wurden nach analytischer Kontrolle auf Enantiomerenreinheit vereinigt. Nach üblicher Aufarbeitung erhielt man 0,22 g des zuerst eluierten (+)Enantiomers und 0,2 g des entsprechenden (-)Enantiomers.

R(+)-(Bis-4,4'-dibenzofuran-3,3'-yl)bis-diethylphosphonat $[\alpha]_D$ = + 72° (c = 1, $CHCl_3$)

S(-)-(Bis-4,4'-dibenzofuran-3,3'-yl)bis-diethylphosphonat $[\alpha]_D$ = -72° (c = 1, $CHCl_3$)

**3. Anwendungsbeispiel:**

Synthese von (+)-(Bis-4,4'-dibenzofuran-3,3'-yl)-bis(diphenylphosphinoxid)

3a) (+)-(Bis-4,4'-dibenzofuran-3,3'-yl)bis(phosphonsäuredichlorid)

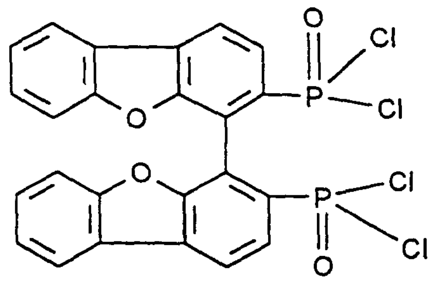

6 g (10 mmol) des (+)-(Bis-2,2'-dibenzofuran-3,3'-yl)-bis-diethylphosphonat wurden in 7,3 ml (100 mmol) Thionylchlorid und 0,8 ml trockenem Diethylformamid gelöst und unter Schutzgas für 4 h zum Rückfluß erhitzt. Anschließend destillierte man das überschüssige Thionylchlorid ab und trocknete im Vakuum. Das bräunliche viskose Öl wurde in Methylenchlorid aufgenommen und filtriert. Das Produkt wurde mit Diethylether gefällt, der entstandene Niederschlag abgesaugt und getrocknet.

Ausbeute: 5,1 g (89 %)
Schmp.: >250°C

3b) (+)-(Bis-4,4'-dibenzofuran-3,3'-yl)-bis(diphenylphosphinoxid)

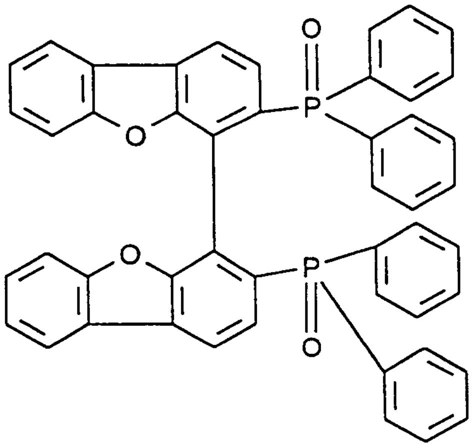

5 g (9 mmol) des (+)-(Bis-2,2'-dibenzofuran-3,3'-yl)bis(phosphonsäuredichlorid) wurden in 400 ml trockenem THF gelöst und unter Schutzgas auf -78°C abgekühlt. Bei dieser Temperatur setzte man 30 ml einer 3M Lösung von Phenylmagnesiumbromid in Diethylether zu. Man rührte noch 30 min und ließ anschließend auf Raumtemperatur erwärmen. Überschüssiges Phenylmagnesiumbromid wurde mit gesättigter Ammoniumchloridlösung gequencht und die Phasen getrennt. Die organische Phase wurde mit gesättigter Natriumchloridlösung gewaschen und über $MgSO_4$ getrocknet. Nach Abdampfen des Lösungsmittels wurde der Rückstand in Methylenchlorid aufgenommen und die Lösung mit Essigester versetzt. Das Methylenchlorid wurde abdestilliert und der entstandene Niederschlag

abgesaugt und getrocknet.

Ausbeute: 4,6 g (70 %)
Schmp.: 270 bis 280°C

Aus den wie vorstehend beschrieben erhältlichen Phosphinoxiden können nach den Angaben in EP-A 0 643 065 chirale Bisphosphine und daraus chirale Übergangsmetall-Katalysatoren hergestellt werden.

## Patentansprüche

**1.** Bisphosphonate der allgemeinen Formel (I)

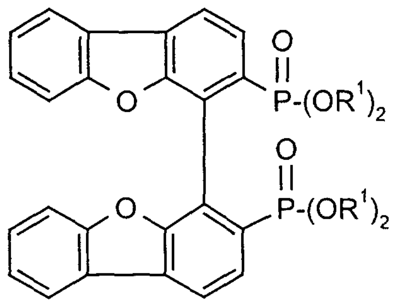

(I),

in welcher

$R^1$ für geradkettiges oder verzweigtes Alkyl mit bis zu 6 Kohlenstoffatomen, Aryl oder Aralkyl, die gegebenenfalls substituiert sein können, steht, oder jeweils zwei Reste $R^1$ zusammen für einen verbrückenden Kohlenwasserstoffrest mit bis zu 6 Kohlenstoffatomen stehen,

in Form ihrer Racemate oder als Enantiomere.

**2.** Bisphosphonate der allgemeinen Formel (I) nach Anspruch 1, **dadurch gekennzeichnet, daß** $R^1$ für geradkettiges oder verzweigtes Alkyl mit bis zu 4 Kohlenstoffatomen steht,
in Form ihrer Racemate oder als Enantiomere.

**3.** Verfahren zur Herstellung von Verbindungen der allgemeinen Formel (I)

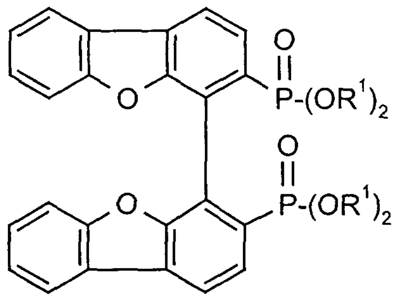

(I),

in welcher

$R^1$ für geradkettiges oder verzweigtes Alkyl mit bis zu 6 Kohlenstoffatomen, Aryl oder Aralkyl, die gegebenenfalls substituiert sein können, steht, oder jeweils zwei Reste $R^1$ zusammen für einen verbrückenden Kohlenwasserstoffrest mit bis zu 6 Kohlenstoffatomen stehen,

**dadurch gekennzeichnet, daß** man Verbindungen der allgemeinen Formel (II)

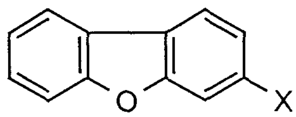

(II),

in welcher

X für Halogen steht,

mit einer Verbindung $P(OR^1)_3$, worin $R^1$ die oben angegebene Bedeutung hat, gegebenenfalls in Gegenwart eines Katalysators und in Lösemitteln, zu Verbindungen der allgemeinen Formel (III)

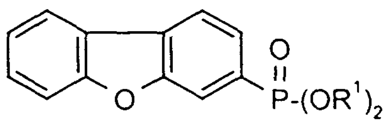

(III),

in welcher

$R^1$ die oben angegebene Bedeutung hat, umsetzt,

diese durch ortho-Lithiierung und anschließende Halogenierung in Verbindungen der allgemeinen Formel (IV)

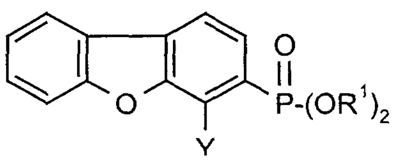

(IV),

in welcher

$R^1$ die oben angegebene Bedeutung hat und

Y für Halogen steht,

überführt,
aus diesen durch an sich bekannte Kupplungsreaktionen racemische Verbindungen der allgemeinen Formel (I) herstellt, und diese mittels einer chromatographischen Enantiomerentrennung an chiralen stationären Phasen in die Enantiomeren trennt.

4. Verfahren nach Anspruch 3, **dadurch gekennzeichnet, daß** die chirale stationäre Phase ein optisch aktives Polymer von optisch aktiven (Meth)acrylsäure-derivaten, Cellulosederivatephasen oder Cellulosetriacetatphasen umfaßt.

5. Verbindungen der allgemeinen Formel (III)

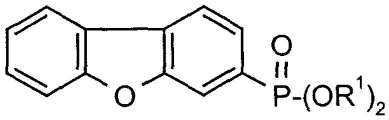

(III),

in welcher

$R^1$ die in Anspruch 1 angegebene Bedeutung hat.

**6.** Verbindungen der allgemeinen Formel (IV)

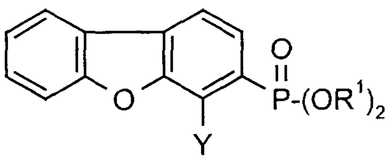

(IV),

in welcher

$R^1$ die in Anspruch 1 angegebene Bedeutung hat und

Y für Halogen steht.

**7.** Verwendung von Verbindungen der Formel (I) nach Anspruch 1 bei der Herstellung von chiralen Bisphosphinverbindungen.

**8.** Verwendung von Verbindungen der Formel (I) nach Anspruch 1 bei der Herstellung von stereoselektiven Übergangsmetall-Katalysatoren.

**Claims**

**1.** Bisphosphonates of the general formula (I)

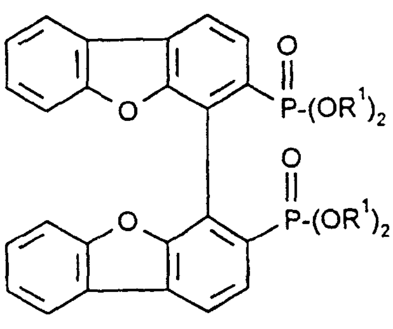

(I),

in which

$R^1$ is linear or branched alkyl having up to 6 carbon atoms, aryl or aralkyl, each of which can optionally be substituted, or two radicals $R^1$ together are a bridging hydrocarbon radical having up to 6 carbon atoms,

in the form of their racemates or as enantiomers.

2. Bisphosphonates of the general formula (I) according to Claim 1, **characterized in that** $R^1$ is linear or branched alkyl having up to 4 carbon atoms,
in the form of their racemates or as enantiomers.

3. Process for the preparation of compounds of the general formula (I)

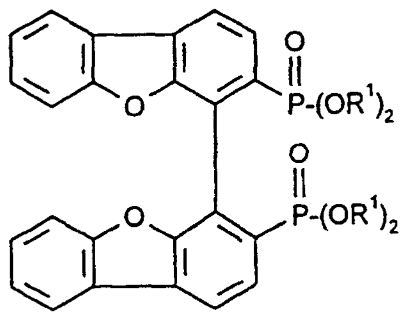

(I),

in which

$R^1$ is linear or branched alkyl having up to 6 carbon atoms, aryl or aralkyl, each of which can optionally be substituted, or two radicals $R^1$ together are a bridging hydrocarbon radical having up to 6 carbon atoms,

**characterized in that** compounds of the general formula (II)

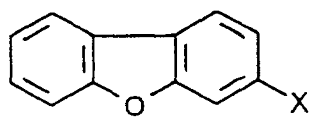

(II),

in which

X is halogen,

are reacted with a compound $P(OR^1)_3$, in which $R^1$ is as defined above, optionally in the presence of a catalyst and in solvents, to give compounds of the general formula (III)

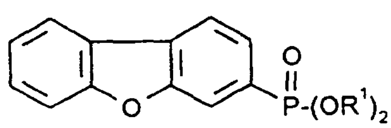

(III),

in which

$R^1$ is as defined above,

these are converted by ortho-lithiation and subsequent halogenation to compounds of the general formula (IV)

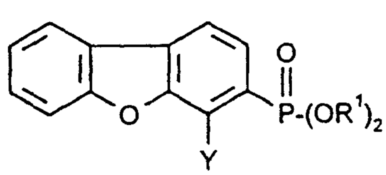

(IV),

in which

$R^1$ is as defined above and

Y is halogen,

and racemic compounds of the general formula (I) are prepared from the latter by means of coupling reactions known *per se* and are resolved into the enantiomers by means of a chromatographic separation of the enantiomers on chiral stationary phases.

**4.** Process according to Claim 3, **characterized in that** the chiral stationary phase comprises an optically active polymer of optically active (meth)acrylic acid derivatives, cellulose derivative phases or cellulose triacetate phases.

**5.** Compounds of the general formula (III)

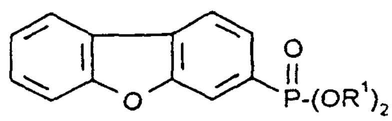

(III),

in which

$R^1$ is as defined in Claim 1.

**6.** Compounds of the general formula (IV)

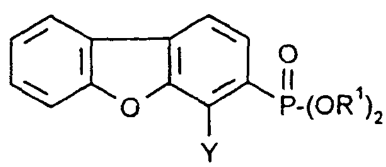

(IV),

in which

$R^1$ is as defined in Claim 1 and

Y is halogen.

**7.** Use of compounds of the formula (I) according to Claim 1 in the preparation of chiral bisphosphine compounds.

**8.** Use of compounds of the formula (I) according to Claim 1 in the preparation of stereoselective transition metal catalysts.

**Revendications**

**1.** Bisphosphonates de formule générale (I)

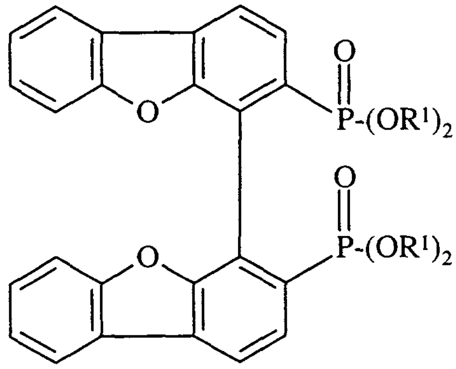

(I),

où

$R^1$ représente alkyle linéaire ou ramifié ayant jusqu'à 6 atomes de carbone, aryle ou aralkyle, qui peuvent éventuellement être substitués, ou bien à chaque fois deux restes $R^1$ représentent ensemble un reste hydrocarboné de pontage ayant jusqu'à 6 atomes de carbone,

sous forme de leurs racémates ou sous forme d'énantiomères.

**2.** Bisphosphonates de formule générale (I) selon la revendication 1, **caractérisés en ce que** $R^1$ représente alkyle linéaire ou ramifié ayant jusqu'à 4 atomes de carbone,
sous forme de leurs racémates ou sous forme d'énantiomères.

**3.** Procédé de préparation de composés de formule générale (I)

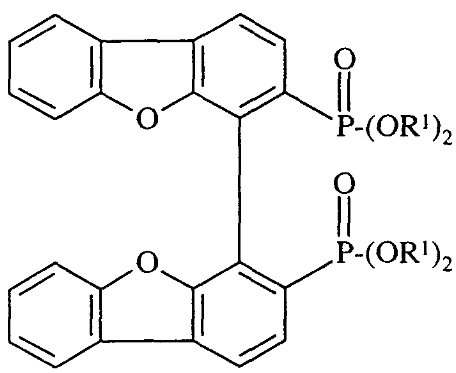

(I),

où

$R^1$ représente alkyle linéaire ou ramifié ayant jusqu'à 6 atomes de carbone, aryle ou aralkyle, qui peuvent éventuellement être substitués, ou bien, à chaque fois deux restes $R^1$ représentent ensemble un reste hydrocarboné de pontage ayant jusqu'à 6 atomes de carbone,

**caractérisé en ce que** l'on convertit des composés de formule générale (II)

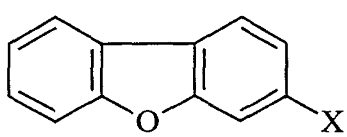

(II),

où

X représente un halogène,

avec un composé $P(OR^1)_3$ où $R^1$ a la signification indiquée ci-dessus, éventuellement en présence d'un catalyseur et dans des solvants, en composés de formule générale (III)

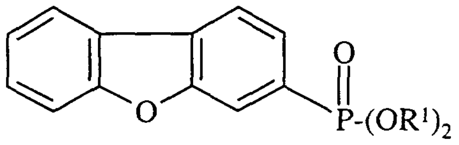

(III),

où

$R^1$ a la signification indiquée ci-dessus,

on convertit ceux-ci par ortho-lithiation puis halogénation en composés de formule générale (IV)

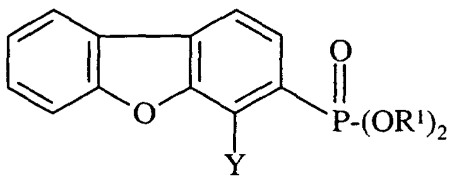

(IV),

où

$R^1$ a la signification indiquée ci-dessus et
Y représente un halogène,

à partir de ceux-ci, on prépare par des réactions de couplage connues en soi, des composés racémiques de formule générale (I) que l'on résout en les énantiomères au moyen d'une séparation chromatographique d'énantiomères sur des phases stationnaires chirales.

4. Procédé selon la revendication 3, **caractérisé en ce que** la phase stationnaire chirale comprend un polymère optiquement actif de dérivés optiquement actifs d'acide (méth)acrylique, des phases de dérivés cellulosiques ou des phases de triacétate de cellulose.

5. Composés de formule générale (III)

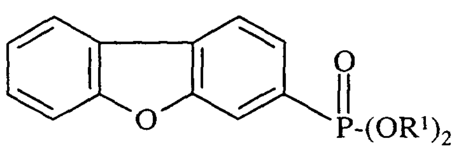

(III),

où

$R^1$ a la signification indiquée dans la revendication 1.

6. Composés de formule générale (IV)

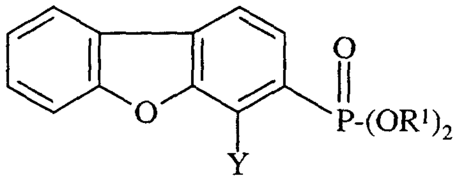

(IV),

où

$R^1$ a la signification indiquée dans la revendication 1 et
Y représente un halogène.

**7.** Utilisation de composés de formule (I) selon la revendication 1 dans la préparation de composés bisphosphines chiraux.

**8.** Utilisation de composés de formule (I) selon la revendication 1 dans la préparation de catalyseurs à métaux de transition stéréosélectifs.